# EUROPEAN PATENT APPLICATION

(11) **EP 4 715 806 A1**
(43) Date of publication of application: **25.03.2026**
(21) Application number: 24902080.1
(22) Date of filing: 03.07.2024
(51) Int. Cl.: G10L 13/027

(54) **AUDIO SYNTHESIS METHOD AND SYSTEM, ELECTRONIC DEVICE, AND COMPUTER READABLE STORAGE MEDIUM**

(30) Priority: 14.12.2023 CN 202311728187
(71) Applicant: IFLYTEK CO., LTD., Hefei, Anhui 230088 (CN)
(72) Inventor: FANG, Xin, Hefei, Anhui 230088 (CN); HU, Yajun, Hefei, Anhui 230088 (CN); PAN, Jia, Hefei, Anhui 230088 (CN); GAO, Jianqing, Hefei, Anhui 230088 (CN); LIU, Cong, Hefei, Anhui 230088 (CN); MA, Zhiqiang, Hefei, Anhui 230088 (CN)
(74) Representative: Herrero & Asociados, S.L.
(86) International application number: PCT/CN2024/103424
(87) International publication number: WO 2025/123652

(57) **Abstract**

An audio synthesis method and system (30), an electronic device (40), and a computer readable storage medium (50). The method comprises: in response to obtaining a text to be processed, inserting spoken expression content into the text to be processed to obtain a spoken text, wherein the spoken expression content at least comprises spoken newly added content and a spoken pause interval (S101); acquiring a prosodic feature of the spoken text, and obtaining a prosodic pause interval of the spoken text on the basis of the prosodic feature (S102); and converting the spoken text into a target audio on the basis of the spoken pause interval and the prosodic pause interval (S103). The method can improve the personification degree of audio synthesis.

## Description

### TECHNICAL FIELD

The present disclosure relates to the technical field of data processing, and in particular to an audio synthesis method, an audio synthesis system, an electronic device, and a computer readable storage medium.

### BACKGROUND

With the development of intelligent devices, more and more intelligent devices support human-computer interaction. During human-computer interaction, it is often necessary to synthesize text data into audio for feedback. However, in an existing human-computer interaction process, the text data is often converted merely into a rigid audio, resulting in an insufficient degree of humanization of audio synthesis. In view of this, how to improve the degree of humanization of audio synthesis has become an urgent problem to be solved.

### SUMMARY OF THE DISCLOSURE

A technical problem addressed by some embodiments of the present disclosure is to provide an audio synthesis method, an audio synthesis system, an electronic device, and a computer readable storage medium, so as to improve a degree of humanization of audio synthesis.

To address the technical problem above, an audio synthesis method is provided by a first aspect of the present disclosure. The audio synthesis method includes: in response to obtaining a text to be processed, inserting a colloquial expression content into the text to be processed and obtaining a colloquialized text, where the colloquial expression content at least includes a colloquial additional content and a colloquial pause interval; acquiring a prosodic feature of the colloquialized text and obtaining a prosodic pause interval of the colloquialized text based on the prosodic feature; and converting the colloquialized text into a target audio based on the colloquial pause interval and the prosodic pause interval.

To address the technical problem above, an audio synthesis system is provided by a second aspect of the present disclosure. The audio synthesis system includes a conversion module, an analysis module, and a generation module. The conversion module is configured to, in response to obtaining a text to be processed, insert a colloquial expression content into the text to be processed and obtain a colloquialized text. The colloquial expression content at least includes a colloquial additional content and a colloquial pause interval. The analysis module is configured to acquire a prosodic feature of the colloquialized text and obtain a prosodic pause interval of the colloquialized text based on the prosodic feature. The generation module is configured to convert the colloquialized text into a target audio based on the colloquial pause interval and the prosodic pause interval.

To address the technical problem above, an electronic device is provided by a third aspect of the present disclosure. The electronic device includes a memory and a processor that are coupled to each other. The memory stores a program instruction and the processor is configured to execute the program instruction to implement the audio synthesis method in the first aspect.

To address the technical problem above, a computer-readable storage medium is provided by a fourth aspect of the present disclosure. The computer-readable storage medium stores a program instruction. The program instruction, when executed by a processor, is configured to implement the audio synthesis method in the first aspect.

In the above solutions, in a case where the text to be processed is obtained, the colloquial expression content may be inserted into the text to be processed and the text to be processed may be converted into the colloquialized text. The colloquial expression content may at least include the colloquial additional content and the colloquial pause interval. Accordingly, the colloquialized text may incorporate additional content characteristics of a colloquial expression, as well as pauses adopted in the colloquial expression. The prosodic feature of the colloquialized text that has been converted may be acquired so that the colloquial additional content may influence the prosodic feature. In this way, the prosodic pause interval corresponding to the colloquialized text may be obtained based on the prosodic feature, so that the prosodic pause interval may be more colloquial. Based on the colloquial pause interval and the prosodic pause interval, the audio synthesis may be performed on the colloquialized text including the colloquial additional content to convert the colloquialized text into the target audio. Accordingly, in a case where the target audio is played, the target audio may include the colloquial additional content and the pause interval may be more colloquial, thereby improving the degree of humanization of the audio synthesis.

### BRIEF DESCRIPTION OF THE DRAWINGS

In order to illustrate technical solutions in some embodiments of the present disclosure more clearly, the drawings needed for the description of the embodiments will be briefly introduced below. Obviously, the drawings in the following description are applied to only some embodiments of the present disclosure. For those ordinary skilled in the art, other drawings can further be obtained based on these drawings without creative work.
FIG. 1 is a flowchart of an audio synthesis method according to an embodiment of the present disclosure.
FIG. 2 is a flowchart of an audio synthesis method according to another embodiment of the present disclosure.
FIG. 3 is a schematic block view of an audio synthesis system according to an embodiment of the present disclosure.
FIG. 4 is a schematic block view of an electronic device according to an embodiment of the present disclosure.
FIG. 5 is a schematic block view of a computer readable storage medium according to an embodiment of the present disclosure.

### DETAILED DESCRIPTION

The technical solutions in some embodiments of the present disclosure may be clearly and completely described below with reference to the accompanying drawings in some embodiments of the present disclosure. It is apparent that the described embodiments are only part of the embodiments of the present disclosure, rather than all of the embodiments. Based on the embodiments in the present disclosure, all other embodiments obtained by those skilled in the art without creative efforts shall fall within the protection scope of the present disclosure.

The terms "system" and "network" may be interchangeably used herein. The term "and/or" is merely used to describe an association relationship among associated objects, and may represent three types of relationships. For example, "A and/or B" may indicate: A alone, A and B together, or B alone. In addition, the character "/" herein generally indicates that the preceding and following objects are in an "or" relationship. Furthermore, the term "plurality" herein means two or more.

An audio synthesis method provided by some embodiments of the present disclosure may be configured to synthesize and obtain an audio with a high degree of humanization. The audio synthesis method may be applied to or configured in a processor capable of processing text and audio. The processor may belong to an intelligent terminal, such as an intelligent terminal capable of performing human-computer interaction with a user, which is not limited herein.

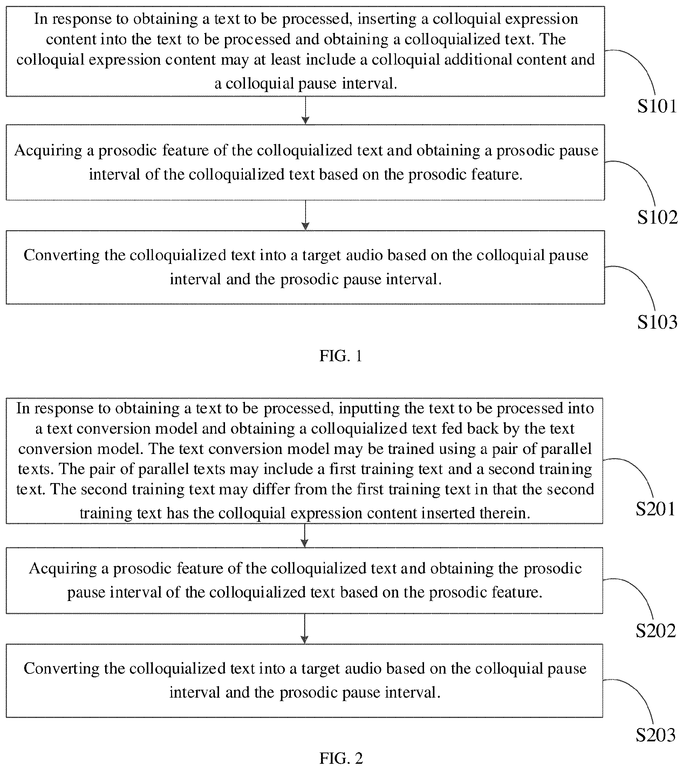

As shown in FIG. 1. FIG. 1 is a flowchart of an audio synthesis method according to an embodiment of the present disclosure. The method may include the following operations.

At operation S101, in response to obtaining a text to be processed, inserting a colloquial expression content into the text to be processed and obtaining a colloquialized text. The colloquial expression content may at least include a colloquial additional content and a colloquial pause interval.

In some embodiments, in a case where the text to be processed is obtained, the colloquial expression content may be inserted into the text to be processed and the text to be processed may be converted into the colloquialized text. The colloquial expression content may at least include the colloquial additional content and the colloquial pause interval.

It may be understood that the colloquialized text incorporates additional content characteristics of a colloquial expression, as well as pauses adopted in the colloquial expression.

In some embodiments, in a case where the text to be processed is obtained, the text to be processed may be input into a pre-trained conversion model. Accordingly, the conversion model may be configured to insert the colloquial expression content into the text to be processed and a colloquialized text output by the conversion model may be obtained. The conversion model may be trained using a written text and a colloquial expression text corresponding to the written text.

In some embodiments, in a case where the text to be processed is obtained, a first prompt text may be constructed based on the text to be processed. The first prompt text may be input into an intelligent analysis model and a colloquialized text fed back by the intelligent analysis model may be obtained. The first prompt text may be configured to prompt the intelligent analysis model to perform a colloquial conversion.

In some embodiments, the intelligent analysis model may be a large language model. The large language model may include, but is not limited to, Deep Neural Networks (DNNs), Convolutional Neural Networks (CNNs), Recurrent Neural Networks (RNNs), Long Short-Term Memory network (LSTM), generative pre-trained Transformer model, and so on. A specific construction and deployment of the large language model may not be particularly limited herein.

Furthermore, the colloquial expression content may include the colloquial additional content and the colloquial pause interval. The colloquial additional content may at least include various colloquial expression terms. The colloquial pause interval may include pause intervals of multiple duration lengths. In addition, the colloquial expression content may further include a colloquial adjustment content. The colloquial adjustment content may be configured to replace a part of content in the text to be processed, such that a relatively formal expression in the text to be processed may be replaced with the colloquial adjustment content.

It should be noted that the various colloquial expression terms may at least include an interjection, a filler, and a repeated word. An onomatopoeic audio may at least include a laughter, an inhalation sound, and a tongue-click sound.

At operation S102, acquiring a prosodic feature of the colloquialized text and obtaining a prosodic pause interval of the colloquialized text based on the prosodic feature.

In some embodiments, the prosodic feature of the colloquialized text that has been converted may be obtained, such that the colloquial additional content may influence the prosodic feature. In this way, the prosodic pause interval corresponding to the colloquialized text may be obtained based on the prosodic feature, enabling the prosodic pause interval to be more colloquial as well.

In some embodiments, a preset character in the colloquialized text may be adjusted or converted into a matching textual form. The adjusted text may be divided into basic units. The preset character may at least include a number, an abbreviation, and a currency symbol. The basic unit may at least include a word and a punctuation mark. The prosodic feature of the colloquialized text may be determined based on the divided text. The colloquialized text may be segmented or tokenized based on the prosodic feature and the prosodic pause interval of the colloquialized text may be obtained.

In some embodiments, a syntax, a discourse structure, and an information structure of the colloquialized text may be obtained. Based on the syntax, the discourse structure, and the information structure, the prosodic feature of the colloquialized text may be determined. The colloquialized text may be segmented or tokenized based on the prosodic feature and the prosodic pause interval of the colloquialized text may be obtained.

It may be understood that the colloquial pause interval inserted into the colloquialized text may be independent of the text content. During acquisition of the prosodic feature of the colloquialized text, the colloquial pause interval may be ignored or blocked. However, since the colloquial additional content has already been added into the colloquialized text, the colloquial additional content may influence the prosodic feature during extraction of the prosodic feature, resulting in the prosodic feature to have a more colloquial expression manner.

In some implementation scenarios, the colloquialized text may be input into a text analysis model and a prosodic pause interval fed back by the text analysis model may be obtained. The text analysis model may be trained using multiple written texts and at least a part of colloquial expression texts corresponding to the written texts.

At operation S103, converting the colloquialized text into a target audio based on the colloquial pause interval and the prosodic pause interval.

In some embodiments, based on the colloquial pause interval and the prosodic pause interval, an audio synthesis may be performed on the colloquialized text including the colloquial additional content. The colloquialized text may be converted into the target audio. Accordingly, in a case where the target audio is played, the target audio may include the colloquial additional content and the pause interval may be more colloquial.

In some embodiments, the colloquial pause interval and the prosodic pause interval may be fused or combined and a text pause interval of the colloquialized text may be obtained. Based on the text pause interval and the word in the colloquialized text, a phoneme sequence corresponding to the colloquialized text may be obtained. The phoneme sequence may be converted into the target audio corresponding to the colloquialized text.

In some embodiments, based on the colloquial pause interval and the prosodic pause interval, the colloquialized text may be divided into multiple fields. The phoneme sequence corresponding to the multiple fields may be determined. The phoneme sequence may be converted into the target audio corresponding to the colloquialized text.

In some implementation scenarios, the phoneme sequence may be input into an end-to-end audio conversion model and a target audio output by the audio conversion model may be obtained. The audio conversion model may be trained using a phoneme sequence sample and a converted audio corresponding to the phoneme sequence sample.

In some application scenarios, the text to be processed may be a reply text configured to respond to a user during a human-computer interaction between the user and an intelligent terminal. The text to be processed may be colloquially converted and output as the target audio with a high degree of humanization, allowing or enabling the user to experience a more realistic and friendly human-computer interaction.

In some other application scenarios, the text to be processed may be a text obtained from information input by the user. The information input by the user may include at least one of a text, a voice, and an image. The information input by the user may be ultimately converted into the text to be processed. The text to be processed may be colloquially converted and output as the target audio with a high degree of humanization, thereby adjusting an original expression in the text to be processed into a colloquial expression and further converted into a playable audio. For example, after converting the originally stiff written expression of the text to be processed into the target audio for playback, an acceptability during user listening may be improved.

In some embodiments, the text to be processed may be a student's written knowledge text. After the text to be processed is converted into the target audio, the student may conveniently listen to the converted target audio to better learn knowledge points. The text to be processed may alternatively be a child's story text. After the text to be processed is converted into the target audio, the child may conveniently listen to the converted target audio to improve a friendliness of story listening. In addition, other application scenarios of the text to be processed in other contexts are not enumerated one by one herein.

In the above solutions, in a case where the text to be processed is obtained, the colloquial expression content may be inserted into the text to be processed and the text to be processed may be converted into the colloquialized text. The colloquial expression content may at least include the colloquial additional content and the colloquial pause interval. Accordingly, the colloquialized text may incorporate additional content characteristics of a colloquial expression, as well as pauses adopted in the colloquial expression. The prosodic feature of the colloquialized text that has been converted may be acquired so that the colloquial additional content may influence the prosodic feature. In this way, the prosodic pause interval corresponding to the colloquialized text may be obtained based on the prosodic feature, so that the prosodic pause interval may be more colloquial. Based on the colloquial pause interval and the prosodic pause interval, the audio synthesis may be performed on the colloquialized text including the colloquial additional content to convert the colloquialized text into the target audio. Accordingly, in a case where the target audio is played, the target audio may include the colloquial additional content and the pause interval may be more colloquial, thereby improving the degree of humanization of the audio synthesis.

As shown in FIG. 2, FIG. 2 is a flowchart of an audio synthesis method according to another embodiment of the present disclosure. The method may include the following operations.

At operation S201, in response to obtaining a text to be processed, inputting the text to be processed into a text conversion model and obtaining a colloquialized text fed back by the text conversion model. The text conversion model may be trained using a pair of parallel texts. The pair of parallel texts may include a first training text and a second training text. The second training text may differ from the first training text in that the second training text has the colloquial expression content inserted therein.

In some embodiments, in a case where the text to be processed is obtained, the text to be processed may be input into the text conversion model. The colloquialized text fed back by the text conversion model may be obtained. Accordingly, the text to be processed may be converted into the colloquialized text. The text conversion model may be pre-trained using the pair of parallel texts. The pairs of parallel text may include the first training text and the second training text corresponding to the first training text.

It should be noted that the second training text differs from the first training text in that the colloquial expression content is inserted in the second training text. The colloquial expression content may at least include the colloquial additional content and the colloquial pause interval. Accordingly, an expression of the second training text may be more colloquial than an expression of the first training text. The colloquial expression content inserted into the second training text may serve as a training label that is configured to realize a supervised training of the text conversion model.

Furthermore, through the use of the text conversion model, the colloquial expression content may be efficiently inserted into the text to be processed, thereby effectively completing the conversion from the text to be processed to the colloquialized text.

It may be understood that the first training text included in the pair of parallel texts may be usually a written expression. A part of the first training text may partially have a colloquial feature. The second training text may be a colloquial expression generated by inserting the colloquial expression content into the first training text. The text conversion model trained using the pair of parallel texts may be configured to convert a text with written expression into a text with colloquial expression. The text conversion model may be further configured to convert a text partially with colloquial feature into a text entirely with colloquial expression.

It should be noted that the colloquial additional content may at least include at least one of the following: an interjection, a filler, a repeated word, and an onomatopoeic audio. The colloquial pause interval may include pause intervals of multiple duration lengths. Each type of the colloquial additional content may be correspondingly preceded by a matching additional start tag and may be correspondingly followed by an additional end tag. For each type of the colloquial pause interval, a matching pause tag may be correspondingly positioned at a location of the colloquial pause interval.

In some embodiments, in addition to the interjection, the filler, the repeated word, and the onomatopoeic audio, the colloquial additional content may further include another additional content such as a rhotic accent and etc., which is not limited herein. The onomatopoeic audio may include a laughter, an inhalation sound, a coughing sound, and a tongue-click sound, which is not limited herein.

Furthermore, in a case where the colloquial additional content is inserted into the text, the matching additional start tag may be inserted before each type of the colloquial additional content, and the additional end tag may be inserted after each type of the colloquial additional content. For example, the additional start tag for the filler may be "fib", and the additional end tag for the filler may be "fie". The additional start tag for the interjection may be "yqb", and the additional end tag for the interjection may be "yqe". Other tags may not be enumerated one by one herein.

It may be understood that, the colloquial pause interval may at least include a stutter pause, a short pause, a long pause, and an extra-long pause, which correspond to pause intervals of multiple duration lengths. For each type of the colloquial pause interval, the matching pause tag may be correspondingly positioned at the colloquial pause interval. For example, the pause tag for the short pause may be "spa", and the pause tag for the long pause may be the "lpa". Other tags are not enumerated one by one herein.

For ease of explanation, taking the pair of parallel texts as an example, a first training sample with a written style may include: "Like in the morning, we have soy milk, fried dough sticks, and buns." A second training sample with a colloquial style, after inserting the colloquial expression content, may include: "<fib>Hmm<fie>like in the morning<fib>basically<fie>we have<spa>soy milk, fried dough sticks, and buns." Accordingly, the additional start tag and additional end tag may be configured to distinguish and locate the colloquial additional content. The pause tag may be configured to distinguish and locate the colloquial pause content. The text conversion model may be configured to perform a training based on rule definitions or adaptive learning, so that the trained text conversion model may be configured to insert the colloquial expression content into the text to be processed and set matching tags at corresponding positions.

In some embodiments, the text conversion model may include an encoder and a decoder. The first training text may be processed by each of the encoder and the decoder to obtain a first predicted text. The colloquial expression content inserted into the second training text may be configured to be a training label of the text conversion model.

In some embodiments, a training process of the text conversion model may include the following operations. The first training text may be input into the encoder. A first encoded text output by the encoder may be obtained. The first encoded text may be input into the decoder. A first predicted text output by the decoder may be obtained. The first predicted text may be compared with the second training text. A first training loss may be determined based on the colloquial expression content included in the second training text and a predicted expression content inserted into the first predicted text. A parameter of the encoder and a parameter of the decoder may be adjusted based on the first training loss until a first convergence condition is satisfied. A trained text conversion model may be obtained. In this way, the text conversion model may be a model constructed based on the encoder and the decoder and obtained through supervised training. Accordingly, the trained text conversion model may be configured to perform a colloquial conversion on the text to be processed and improve a controllability of the colloquial conversion process.

In some other embodiments, the text conversion model may include a prompt construction unit and an intelligent analysis model. The prompt construction unit may be configured to construct a prompt text based at least on the first training text and input the prompt text into the intelligent analysis model. The prompt text may be configured to prompt the intelligent analysis model to perform the colloquial conversion and output a second predicted text. In a case where the prompt text further includes a part of the pair of parallel texts, the pair of parallel texts may serve as an example sample. The colloquial expression content inserted in the second training text may be configured to be a training label of the text conversion model.

In some embodiments, the prompt construction unit in the text conversion model may be configured to construct a prompt text. The prompt text may at least include the first training text and a colloquial conversion requirement. In a case where the prompt text further includes the part of the pair of parallel texts, the pair of parallel texts may be configured to be the example sample that matches with the colloquial conversion requirement. After the prompt text is provided to the intelligent analysis model, the intelligent analysis model may feed back the second predicted text. The second predicted text may be compared with the second training text. A second training loss may be determined based on the colloquial expression content included in the second training text and the predicted expression content inserted in the second predicted text. The intelligent analysis model may be fine-tuned based on the second training loss, until a second convergence condition is satisfied. The trained text conversion model may be trained. In this way, the text conversion model may be obtained through fine-tuning the intelligent analysis model through the supervised training. Accordingly, the trained text conversion model may be configured to perform the colloquial conversion on the text to be processed, thereby reducing a consumption of terminal resources for colloquial conversion.

In some embodiments, the fine-tuning of the intelligent analysis model may be performed through constructing the prompt text in a zero-sample manner. For example, the first training sample with written style may include: Like in the morning, we have soy milk, fried dough sticks, and buns. The prompt text constructed in the zero-sample manner may include: Please perform colloquial conversion on the text {Like in the morning, we have soy milk, fried dough sticks, and buns} and set labels at corresponding positions.

In some other embodiments, the fine-tuning of the intelligent analysis model may be performed by constructing the prompt text in a few-sample manner. The prompt text constructed in the few-sample manner may include: The written expression text is Southern cuisine really loves to use dipping sauces and such. The transcribed colloquial expression text may be <fib>um<fie>for Southern cuisine,<fib>uh<fie><std>really loves to use dipping sauces<yqb>ah<yqe>and such. Please, based on the above description, transcribe the following written text: {Like in the morning, we have soy milk, fried dough sticks, and buns}. Therefore, in a case where the prompt text further includes a part of the pair of parallel texts, the pair of parallel texts may serve as the example sample, which may improve a learning accuracy and a convergence efficiency of the intelligent analysis model.

At operation S202, acquiring a prosodic feature of the colloquialized text and obtaining the prosodic pause interval of the colloquialized text based on the prosodic feature.

In some embodiments, the prosodic feature of the colloquialized text may be extracted. The prosodic pause interval of the colloquialized text may be determined based on the prosodic feature.

In some embodiments, the colloquialized text may be input into a text analysis model. The prosodic pause interval fed back by the text analysis model may be obtained. The text analysis model may be configured to perform text normalization on the colloquialized text and to tokenize the colloquialized text that has been normalized. The text analysis model may be further configured to determine the prosodic feature based on the colloquialized text that has been tokenized, thereby obtaining the prosodic pause interval of the colloquialized text based on the prosodic feature. The text analysis model may be trained using the first training text.

In some embodiments, the conversion from the text to be processed to the target audio may be divided into two stages. The first stage may be the colloquial conversion of the text to be processed through the text conversion model to obtain the colloquialized text. The second stage may be a parsing of the colloquialized text through the text analysis model to obtain the prosodic pause interval and subsequently finish the audio conversion.

Furthermore, the text analysis model may be trained using the first training text. The text analysis model may focus on the extraction of the prosodic feature and the capability of determining the prosodic pause interval based on the prosodic feature. The trained text analysis model may be configured to normalize the colloquialized text and tokenize the colloquialized text that has been normalized. The trained text analysis model may be further configured to determine the prosodic feature based on the colloquialized text that has been tokenized, and thereby obtain the prosodic pause interval of the colloquialized text based on the prosodic feature.

It should be noted that during the text normalization, a preset character in the colloquialized text may be converted into a matching text form. During the tokenization, the adjusted text may be divided into basic units. The preset character may at least include a number, an abbreviation, and a currency symbol. The basic unit may at least include a word and a punctuation mark. The prosodic feature of the colloquialized text may be determined based on the divided text. The colloquialized text may be tokenized or segmented based on the prosodic feature to obtain the prosodic pause interval of the colloquialized text, thereby improving the accuracy of the prosodic pause interval.

At operation S203, converting the colloquialized text into a target audio based on the colloquial pause interval and the prosodic pause interval.

In some embodiments, based on the colloquial pause interval and the prosodic pause interval, the audio synthesis may be performed on the colloquialized text including the colloquial additional content. The colloquialized text may be converted into the target audio.

In some embodiments, based on the colloquial pause interval and the prosodic pause interval, the text pause interval of the colloquialized text may be determined. Based on the colloquialized text and the text pause interval corresponding to the colloquialized text, a phoneme sequence corresponding to the colloquialized text may be obtained. Based on the phoneme sequence, the target audio corresponding to the colloquialized text may be obtained.

In some embodiments, the colloquial pause interval and the prosodic pause interval may be fused or combined to obtain the text pause interval corresponding to the colloquialized text. Accordingly, the text pause interval may be obtained through combining the colloquial feature and the prosodic feature, thereby improving the accuracy of pauses in the colloquialized text. The colloquialized text may be divided based on the text pause interval to obtain divided words. The words may be converted into a phoneme sequence, that is, the phoneme is used to represent a pronunciation. In this way, the audio conversion may be performed based on the phoneme sequence to obtain a target audio corresponding to the colloquialized text, enabling the target audio to exhibit a high degree of humanization.

In some implementation scenarios, an acoustic feature may be obtained from the phoneme sequence. The acoustic feature may at least include a fundamental frequency and a spectral feature. The acoustic feature may be converted into continuous speech sample point audio signals. The target audio corresponding to the colloquialized text may be obtained.

In some implementation scenarios, a mapping relationship between the phoneme sequence and the acoustic feature may be obtained through a feature extraction model. The feature extraction model may include at least one of the following: Recurrent Neural Networks (RNNs), a Long Short-Term Memory (LSTM) network, and a generative pre-trained Transformer, which is not limited herein. The conversion from the acoustic feature to the target audio may be performed through a vocoder. The present disclosure does not limit the algorithm used by the vocoder.

In some embodiments, the conversion from the phoneme sequence to the target audio may further be performed using an end-to-end audio conversion model. The audio conversion model may be trained using the phoneme sequence sample and the converted audio corresponding to the phoneme sequence sample.

In some implementation scenarios, multiple prosodic pause intervals may correspond to multiple interval duration levels. Multiple colloquial pause intervals may match with at least some of the interval duration levels. A process of determining the text pause interval of the colloquialized text based on the colloquial pause interval and the prosodic pause interval may include: obtaining the text pause interval of the colloquialized text, based on the interval duration level corresponding to the colloquial pause interval and a position of the colloquial pause interval in the colloquialized text, as well as based on the interval duration level corresponding to the prosodic pause interval and a position of the prosodic pause interval in the colloquialized text.

In some embodiments, multiple prosodic pause intervals may match with respective interval duration levels. Multiple colloquial pause intervals may match with at least some of the interval duration levels. The position of the colloquial pause interval in the colloquialized text and the interval duration level matched with the colloquial pause intervals may be annotated. The position of the prosodic pause interval in the colloquialized text and the interval duration level matched with the prosodic pause interval may be annotated. The text pause interval of the colloquialized text may be obtained, which enables the colloquial pause interval and the prosodic pause interval to be integrated with each other, thereby obtaining standardized text pause intervals with unified levels and allowing the target audio conversion to achieve a higher precision.

In some application scenarios, multiple prosodic pause intervals may at least include five interval duration levels. The interval duration levels, from the shortest to the longest, may at least include: a word-level L1, a phrase-level L2, a prosodic pause L3, a punctuation mark L4, and a paragraph pause L5. The colloquial pause interval may include a short pause, a long pause, and an extra-long pause. The short pause may correspond to the L2. The long pause may correspond to the L3. The extra-long pause may correspond to the L4. In some other application scenarios, both the number of interval duration level and the interval duration level matched with the colloquial pause interval may be customized, and the present disclosure is not limited thereto.

It should be noted that implementations or implementation scenarios described in any of the above embodiments are not limited to a single embodiment, and different embodiments may be combined with each other. The present disclosure is not limited thereto.

Different from the above embodiments, the conversion from the text to be processed to the target audio may be divided into two stages. The first stage may be the colloquial conversion of the text to be processed through the text conversion model to obtain the colloquialized text. The second stage may be the parsing of the colloquialized text through the text analysis model to obtain the prosodic pause interval and subsequently finish the audio conversion. The construction and training of the text conversion model may include various implementations. The trained text conversion model may be configured to insert the colloquial expression content into the text to be processed and set the matching tag at the corresponding position. Thereafter, the colloquial pause interval and prosodic pause interval may be integrated to obtain the phoneme sequence, that is, the phoneme is used to represent the pronunciation. In this way, the audio conversion may be performed based on the phoneme sequence to obtain the target audio corresponding to the colloquialized text, enabling the target audio to exhibit a high degree of humanization.

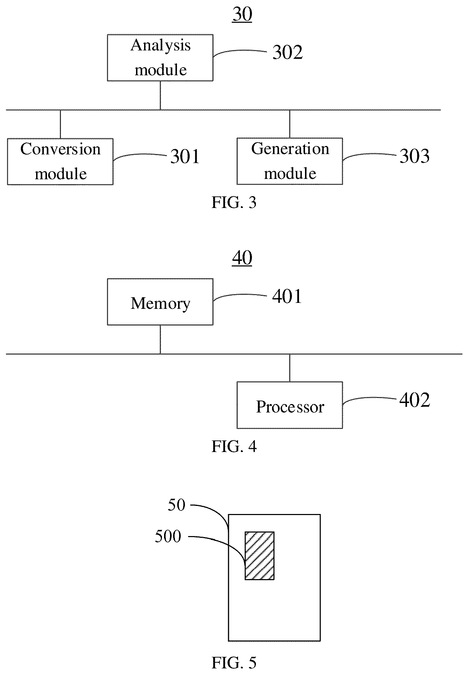

As shown in FIG. 3, FIG. 3 is a schematic block view of an audio synthesis system according to an embodiment of the present disclosure. The audio synthesis system 30 may include a conversion module 301, an analysis module 302, and a generation module 303. In response to obtaining a text to be processed, the conversion module 301 may be configured to insert a colloquial expression content into the text to be processed and obtain a colloquialized text. The colloquial expression content may at least include a colloquial additional content and a colloquial pause interval. The analysis module 302 may be configured to acquire a prosodic feature of the colloquialized text and obtain a prosodic pause interval of the colloquialized text based on the prosodic feature. The generation module 303 may be configured to convert the colloquialized text into a target audio based on the colloquial pause interval and the prosodic pause interval.

In the above solutions, in a case where the text to be processed is obtained, the conversion module 301 may be configured to insert colloquial expression content into the text to be processed, thereby converting the text to be processed into the colloquialized text. The colloquial expression content may at least include the colloquial additional content and the colloquial pause interval. Accordingly, the colloquialized text may incorporate additional content characteristics of a colloquial expression, as well as pauses adopted in the colloquial expression. The analysis module 302 may be configured to acquire the prosodic feature of the colloquialized text that has been converted, such that the colloquial additional content may influence the prosodic feature. Accordingly, the prosodic feature of the colloquialized that has been converted text may be obtained such that the colloquial additional content may influence the prosodic feature. In this way, the prosodic pause interval corresponding to the colloquialized text may be obtained based on the prosodic feature, enabling the prosodic pause interval to be more colloquial as well. The generation module 303 may be configured to, based on the colloquial pause interval and the prosodic pause interval, perform the audio synthesis on the colloquialized text including the colloquial additional content to convert the colloquialized text into the target audio. Accordingly, in a case where the target audio is played, the target audio may include the colloquial additional content and the pause interval that is more colloquial, thereby improving the degree of humanization of the audio synthesis.

In some embodiments, the conversion module 301 may further be configured to input the text to be processed into a text conversion model and obtain a colloquialized text fed back by the text conversion model. The text conversion model may be trained using a pair of parallel texts. The pair of parallel texts may include a first training text and a second training text. The second training text may differ from the first training text in that the second training text has the colloquial expression content inserted therein.

In some embodiments, the text conversion model may include an encoder and a decoder. The first training text may be processed by the encoder and the decoder to obtain a first predicted text. In some embodiments, the text conversion model may include a prompt construction unit and an intelligent analysis model. The prompt construction unit may be configured to construct a prompt text based at least on the first training text and input the prompt text into the intelligent analysis model. The prompt text may be configured to prompt the intelligent analysis model to perform the colloquial conversion and output a second predicted text. In a case where the prompt text further includes a part of the pair of parallel texts, the pair of parallel texts may serve as an example sample. The colloquial expression content inserted in the second training text may serve as a training label of the text conversion model.

In some embodiments, the colloquial additional content may at least include at least one of the following: an interjection, a filler, a repeated word, and an onomatopoeic audio. The colloquial pause interval may include pause intervals of multiple duration lengths. Each type of the colloquial additional content may be correspondingly preceded by a matching additional start tag and may be correspondingly followed by an additional end tag. For each type of the colloquial pause interval, a matching pause tag may be correspondingly positioned at a location of the colloquial pause interval.

In some embodiments, the analysis module 302 may further be configured to input the colloquialized text into a text analysis model and obtain the prosodic pause interval fed back by the text analysis model. The text analysis model may be configured to perform text normalization on the colloquialized text and to tokenize the colloquialized text that has been normalized. The text analysis model may be further configured to determine the prosodic feature based on the colloquialized text that has been tokenized, thereby obtaining the prosodic pause interval of the colloquialized text based on the prosodic feature. The text analysis model may be trained using the first training text.

In some embodiments, the generation module 303 may further be configured to determine the text pause interval of the colloquialized text based on the colloquial pause interval and the prosodic pause interval. The generation module 303 may further be configured to obtain a phoneme sequence corresponding to the colloquialized text, based on the colloquialized text and the text pause interval corresponding to the colloquialized text, and obtain the target audio corresponding to the colloquialized text based on the phoneme sequence.

In some embodiments, multiple prosodic pause intervals may correspond to multiple interval duration levels. Multiple colloquial pause intervals may match with at least some of the interval duration levels. The generation module 303 may further be configured to obtain the text pause interval of the colloquialized text, based on the interval duration level corresponding to the colloquial pause interval and a position of the colloquial pause interval in the colloquialized text, as well as based on the interval duration level corresponding to the prosodic pause interval and a position of the prosodic pause interval in the colloquialized text.

As shown in FIG. 4, FIG. 4 is a schematic block view of an electronic device according to an embodiment of the present disclosure. The electronic device 40 may include a memory 401 and a processor 402 that are coupled to each other. The memory 401 may store a program instruction (not shown in the figure). The processor 402 may be configured to execute the program instruction to implement the audio synthesis method in any one of the foregoing embodiments. The related content may be described in detail in the foregoing method embodiments and thus will not be repeated herein.

The above solutions may improve the degree of humanization of audio synthesis.

As shown in FIG. 5, FIG. 5 is a schematic block view of a computer readable storage medium according to an embodiment of the present disclosure. A computer-readable storage medium 50 may store a program instruction 500. The program instruction 500, when executed by a processor, may be configured to implement the audio synthesis method in any one of the foregoing embodiments. The related content may be described in detail in the foregoing method embodiments and thus will not be repeated herein.

The above solutions may improve the degree of humanization of audio synthesis.

It should be noted that units described as separate components may or may not be physically separate. Components presented as units may or may not be physical units. That is, the components may be located in one place or distributed across multiple network units. Some or all of the units may be selected as needed to achieve the objectives of the embodiments.

In addition, the functional units in various embodiments of the present application may be integrated into one processing unit, or each unit may exist alone physically, or two or more units may be integrated into one unit. The above integrated units may be implemented in the form of hardware or in the form of software functional units.

When the integrated units are implemented in the form of software functional units and sold or used as independent products, they may be stored in a computer-readable storage medium. Based on this understanding, the technical solutions of the present disclosure, in essence or in part, may be embodied as a software product. The computer software product may be stored in a storage medium and include several instructions for causing a computer device (which may be a personal computer, a server, or a network device, etc.) or a processor to execute all or part of the operations of the methods in the embodiments of the present disclosure. The aforementioned storage medium may include various media capable of storing program codes, such as a universal serial bus (USB) flash drive, a portable hard disk, a read-only memory (ROM), a random access memory (RAM), a magnetic disk, an optical disk, or the like.

The embodiments described above are merely examples of the present disclosure and are not intended to limit the scope of the present disclosure. Any equivalent structural or process transformations made based on the contents of the specification and drawings of the present disclosure, or direct or indirect applications in other related technical fields, shall fall within the scope of protection of the present disclosure.

## Claims

1. An audio synthesis method, comprising:
in response to obtaining a text to be processed, inserting a colloquial expression content into the text to be processed and obtaining a colloquialized text, wherein the colloquial expression content at least comprises a colloquial additional content and a colloquial pause interval;
acquiring a prosodic feature of the colloquialized text and obtaining a prosodic pause interval of the colloquialized text based on the prosodic feature; and
converting the colloquialized text into a target audio based on the colloquial pause interval and the prosodic pause interval.

2. The method as claimed in claim 1, wherein inserting the colloquial expression content into the text to be processed and obtaining the colloquialized text, comprises:
inputting the text to be processed into a text conversion model and obtaining the colloquialized text fed back by the text conversion model;
wherein the text conversion model is trained using a pair of parallel texts, the pair of parallel texts comprises a first training text and a second training text, and the second training text differs from the first training text in that the second training text has the colloquial expression content inserted therein.

3. The method as claimed in claim 2, wherein the text conversion model comprises an encoder and a decoder, and the first training text is processed by each of the encoder and the decoder to obtain a first predicted text;
wherein the colloquial expression content inserted in the second training text is configured to be a training label of the text conversion model.

4. The method as claimed in claim 2, wherein the text conversion model comprises a prompt construction unit and an intelligent analysis model, the prompt construction unit is configured to construct a prompt text based at least on the first training text and input the prompt text into the intelligent analysis model, and the prompt text is configured to prompt the intelligent analysis model to perform a colloquial conversion and output a second predicted text; and
wherein the colloquial expression content inserted in the second training text is configured to be a training label of the text conversion model.

5. The method as claimed in claim 4, wherein the prompt text at least comprises the first training text and a colloquial conversion requirement, and in a case where the prompt text further comprises a part of the pair of parallel texts, the pair of parallel texts is configured to be an example sample that matches with the colloquial conversion requirement.

6. The method as claimed in claim 2, wherein acquiring the prosodic feature of the colloquialized text and obtaining the prosodic pause interval of the colloquialized text based on the prosodic feature, comprises:
inputting the colloquialized text into a text analysis model and obtaining the prosodic pause interval fed back by the text analysis model;
wherein the text analysis model is configured to perform a text normalization on the colloquialized text, tokenize the colloquialized text that has been normalized, and determine the prosodic feature based on the colloquialized text that has been tokenized, thereby obtaining the prosodic pause interval of the colloquialized text based on the prosodic feature; and
wherein the text analysis model is trained using the first training text.

7. The method as claimed in claim 1, wherein the colloquial additional content comprises at least one of the following: an interjection, a filler, a repeated word, and an onomatopoeic audio; and
the colloquial pause interval comprises pause intervals of multiple duration lengths.

8. The method as claimed in claim 7, wherein each type of the colloquial additional content is correspondingly preceded by a matching additional start tag and is correspondingly followed by an additional end tag; and
a matching pause tag is correspondingly positioned at a location of each type of the colloquial pause interval.

9. The method as claimed in claim 1, wherein converting the colloquialized text into the target audio based on the colloquial pause interval and the prosodic pause interval, comprises:
determining a text pause interval of the colloquialized text based on the colloquial pause interval and the prosodic pause interval;
obtaining a phoneme sequence corresponding to the colloquialized text based on the colloquialized text and the text pause interval corresponding to the colloquialized text; and
obtaining the target audio corresponding to the colloquialized text based on the phoneme sequence.

10. The method as claimed in claim 9, wherein the number of the prosodic pause interval is more than one, and the more than one prosodic pause interval corresponds to more than one interval duration level;
the number of the colloquial pause interval is more than one, and the more than one colloquial pause interval matches with at least a part of the more than one interval duration level.

11. The method as claimed in claim 10, wherein determining the text pause interval of the colloquialized text based on the colloquial pause interval and the prosodic pause interval, comprises:
obtaining the text pause interval of the colloquialized text, based on the interval duration level corresponding to the colloquial pause interval and a position of the colloquial pause interval in the colloquialized text, as well as based on the interval duration level corresponding to the prosodic pause interval and a position of the prosodic pause interval in the colloquialized text.

12. The method as claimed in claim 10, wherein the more than one prosodic pause interval at least comprises five interval duration levels, and the interval duration levels, from the shortest to the longest, at least comprises: a word-level, a phrase-level, a prosodic pause, a punctuation mark, and a paragraph pause; and
the more than one colloquial pause interval comprises a short pause, a long pause, and an extra-long pause, the short pause corresponds to the phrase-level, the long pause corresponds to the prosodic pause, and the extra-long pause corresponds to the punctuation mark.

13. An audio synthesis system, comprising:
a conversion module, configured to, in response to obtaining a text to be processed, insert a colloquial expression content into the text to be processed and obtain a colloquialized text, wherein the colloquial expression content at least comprises a colloquial additional content and a colloquial pause interval;
an analysis module, configured to acquire a prosodic feature of the colloquialized text and obtain a prosodic pause interval of the colloquialized text based on the prosodic feature; and
a generation module, configured to convert the colloquialized text into a target audio based on the colloquial pause interval and the prosodic pause interval.

14. An electronic device, comprising: a memory and a processor that are coupled to each other, wherein the memory stores a program instruction and the processor is configured to execute the program instruction to implement the audio synthesis method as claimed in any one of claims 1-12.

15. A computer-readable storage medium, storing a program instruction, wherein the program instruction, when executed by a processor, is configured to implement the audio synthesis method as claimed in any one of claims 1-12.
